# FASCICULE DE BREVET EUROPEEN

(11) **EP 2 780 156 B1**
(45) Date de publication et mention de la délivrance du brevet: **03.04.2019**
(21) Numéro de dépôt: 12813391.5
(22) Date de dépôt: 15.11.2012
(51) Int. Cl.: B29C 70/38, B29C 35/08, B29C 70/54

(54) **TETE D'APPLICATION DE FIBRES BI-DIRECTIONNELLE**
BIDIREKTIONALER FASERLEGEKOPF
TWO DIRECTIONAL FIBRE LAYING HEAD

(30) Priorité: 18.11.2011 FR 1160564
(43) Date de publication de la demande: 24.09.2014
(73) Titulaire: Coriolis Group, 56530 Quéven (FR)
(72) Inventeur: HARDY, Yvan, F-56270 Ploemeur (FR); HAMLYN, Alexander, F-56270 Ploemeur (FR); LE BORGNE, Olivier, F-56100 Lorient (FR); GAILLARD, Loïc, F-56600 Lanester (FR)
(86) Numéro de dépôt international: PCT/FR2012/000469
(87) Numéro de publication internationale: WO 2013/072583

(56) Documents cités:
- EP-A1- 2 263 864
- EP-A1- 2 574 448
- EP-A1- 2 574 448
- EP-A2- 2 495 093
- EP-A2- 2 495 093
- FR-A1- 2 865 156
- US-A- 4 285 752
- US-A- 4 560 433
- US-A- 5 979 531
- US-A1- 2009 140 451

## Description

La présente invention concerne une tête d'application de fibres pour la réalisation de pièces en matériaux composites, plus particulièrement une tête d'application de fibres bidirectionnelle permettant l'application de fibres dans deux directions opposées.

Il est connu des machines d'application de fibres pour l'application au contact sur un outillage de drapage, tel qu'un moule mâle ou femelle, d'une bande large formée d'une ou plusieurs fibres plates continues, de type rubans, sèches ou imprégnées de résine thermodurcissable ou thermoplastique, notamment des fibres de carbone, constituées d'une multitude de fils ou filaments de carbone.

Ces machines comprennent classiquement un système de déplacement d'une tête d'application de fibres, ladite tête comportant un rouleau d'application destiné à venir en contact contre le moule pour appliquer la bande, et un système de guidage pour guider la ou les fibres d'application sur ledit rouleau.

Dans le cas d'une bande formée de plusieurs fibres, le système de guidage de ces machines d'application, également appelées machines de placement de fibres, permettent d'amener les fibres sensiblement bord à bord sur le rouleau sous la forme d'une bande. Tel que décrit notamment dans le document brevet WO2008132299, le système de guidage comprend classiquement des premiers moyens et des seconds moyens disposés en quinconce selon deux plans de guidage se rapprochant l'un de l'autre d'amont en aval pour guider les fibres vers le rouleau sous la forme de deux nappes de fibres, ces moyens de guidage comprennent par exemple des canaux formés à l'interface d'assemblage de trois plaques. La tête comprend en outre des moyens de coupe pour couper individuellement chaque fibre, et des moyens de réacheminement pour réacheminer chaque fibre venant d'être coupée afin de pouvoir à tout moment stopper et reprendre l'application d'une bande, ainsi que choisir la largeur de la bande.

Après application d'une première bande dans une direction, l'application de la bande suivante, parallèlement à la première, est classiquement réalisée dans la direction inverse après avoir effectué une rotation de 180°de la tête, ou dans la même direction que la première bande, après avoir ramené en arrière la tête jusqu'au point de départ de la première bande. Ces opérations de déplacement de la tête entre l'application de deux bandes augmentent considérablement le temps de dépose des fibres.

Pour réduire ce temps de dépose, il est connu des têtes dites bidirectionnelles, permettant l'application de fibres dans deux directions opposées. Il a été proposé, notamment dans le document brevet US2005/0061422, une tête d'application comprenant deux systèmes de guidage indépendants l'un de l'autre, disposés symétriquement de part et d'autre du rouleau d'application, pour appliquer une bande dans deux directions opposées en utilisant l'un ou l'autre des systèmes de guidage. Une telle tête équipée de deux systèmes de guidage, chacun associé à son propre système de coupe et son propre système de réacheminement, s'avère encombrante et lourde, ce qui limite la vitesse de dépose des fibres et ne permet pas l'application de fibres sur des moules à convexité et/ou concavité importantes. En outre, chaque système de guidage doit être associé à des moyens de stockage de fibres différents, ce qui augmente la complexité de la machine d'application.

Il a également été proposé, notamment dans le document brevet US 2009/0139654 une tête équipée d'un système de guidage qui comprend pour chaque fibre un élément de guidage déplaçable entre une première position et une deuxième position pour amener la fibre d'un côté ou de l'autre du rouleau, chaque élément de guidage étant manoeuvré entre ses deux positions par son propre système d'actionnement. Ces systèmes de guidage s'avèrent complexes et volumineux, et nécessitent plusieurs rouleaux distincts. Deux fibres adjacentes d'une bande doivent être appliquées par des rouleaux différents, chacun associé à son propre système de guidage, et décalés l'un de l'autre dans la direction d'application. La tête résultante présente également un encombrement important, et ne peut être utilisée pour la réalisation de pièces à convexité ou concavité importante.

Le document brevet EP 2 574 448 divulgue une tête d'application de fibres selon le préambule de la revendication 1. Le document brevet EP 2 495 093 divulgue une tête d'application similaire, mais dans laquelle la manoeuvre du rouleau entre ses deux positions est réalisée par déplacement du rouleau le long d'un chemin linéaire.

Le but de la présente invention est de proposer une solution visant à pallier les inconvénients précités.

A cet effet, la présente invention propose une tête d'application de fibres selon la revendication 1 pour la réalisation de pièces en matériau composite.

Selon l'invention, le rouleau d'application est monté mobile par rapport au système de guidage principal et peut être manoeuvré entre deux positions de sorte que les fibres soient amenées d'un côté ou de l'autre du rouleau pour permettre l'application des fibres dans deux directions opposées.

Le système de guidage principal est par exemple monté fixe sur un élément de support de la tête et le rouleau est monté mobile entre ses deux positions sur ledit élément de support ou sur ledit système de guidage. Selon un mode de réalisation, la tête comprend une structure support par laquelle la tête est apte à être fixée à un système de déplacement, en particulier le poignet d'extrémité d'un robot, et ledit élément de support est monté sur ladite structure support de manière mobile en translation et est sollicité élastiquement par au moins un vérin de compactage dans une direction.

Le montage mobile du rouleau par rapport au système de guidage principal peut être réalisé facilement, et permet de proposer une tête bidirectionnelle simple de conception et de mise en oeuvre, peu encombrante, et assurant une vitesse d'application de fibre sensiblement analogue à celle d'une tête monodirectionnelle.

Selon un mode de réalisation, ledit rouleau d'application est monté pivotant autour d'un axe de pivotement disposé au-dessus de l'axe de rotation par rapport à la surface d'application et parallèlement audit axe de rotation, et de préférence disposé selon un plan médian du système de guidage, par exemple un plan de symétrie de ce dernier, la manoeuvre du rouleau d'application entre ses deux positions étant réalisée par pivotement dudit rouleau autour dudit axe de pivotement. Selon un autre mode de réalisation, la manoeuvre du rouleau d'application entre ses deux positions est réalisée par un mouvement de translation, le rouleau d'application est montée mobile en translation par rapport au système de guidage principal.

Selon un mode de réalisation, ledit rouleau d'application est monté rotatif autour de son axe de rotation, à l'extrémité inférieure d'au moins un bras, de préférence aux extrémités inférieures de deux bras, s'étendant de part et d'autre du système de guidage, chaque bras étant monté pivotant autour dudit axe de pivotement.

Le système de guidage additionnel selon l'invention monté mobile avec le rouleau permet d'assurer un guidage des fibres au plus près du rouleau.

Selon un mode de réalisation, lesdits premiers et/ou deuxièmes moyens de guidage additionnels comprennent un peigne comprenant une pluralité de languettes flexibles aptes à venir contre la ou lesdites fibres sortant des moyens de guidage pour mettre la ou lesdites fibres en appui contre le rouleau d'application. De telles languettes flexibles permettent de plaquer la ou les fibres contre le rouleau d'application. L'utilisation de plusieurs languettes flexibles permet une mise en appui de la bande de fibre sur toute sa largeur, quelle que soit la largeur de celle-ci, et quelles que soient les éventuelles déformations du rouleau d'application dues au profil de la surface d'application, garantissant ainsi un positionnement précis de la ou des fibres lors du drapage. Dans le cas d'une bande formée de plusieurs fibres, les languettes flexibles garantissent un bon maintien des fibres les unes par rapport aux autres, sensiblement bord à bord, et évite une déviation latérale des fibres notamment lors de trajectoires courbes de la tête sur le moule. Lesdites languettes flexibles sont avantageusement sensiblement en contact, et de préférence élastiquement en appui contre le rouleau d'application en l'absence de fibres sortant du système de guidage, de sorte que la ou les fibres sortant du système de guidage principal soient pincées entre le rouleau d'application et lesdites languettes flexibles.

Selon un mode de réalisation, les premiers et/ou deuxièmes moyens de guidage additionnels comprennent un canal de guidage additionnel pour chaque fibre de la bande.

Selon un mode de réalisation, le système de guidage additionnel est monté pivotant autour de l'axe de rotation du rouleau, des moyens de blocage, de préférence de type magnétique, étant aptes à bloquer en rotation ledit système de guidage additionnel de sorte que les premiers moyens de guidage additionnel soient positionnés dans le prolongement du système de guidage principal lorsque le rouleau est dans sa première position, et que les seconds moyens de guidage soient positionnés dans le prolongement du système de guidage principal lorsque le rouleau est dans sa deuxième position. Un tel montage pivotant du système de guidage additionnel permet d'obtenir un système de guidage additionnel qui soit au plus près, et de préférence au contact, du système de guidage principal pour assurer un bon passage des fibres du système de guidage principal au système de guidage additionnel. En l'absence d'un tel montage pivotant, un écart d'au moins 4-5 millimètres est nécessaire entre le système de guidage principal et le système de guidage additionnel lorsque ce dernier est bloqué en rotation, pour permettre le pivotement du rouleau entre ses deux positions.

Selon un autre mode de réalisation, le système de guidage additionnel est monté, directement ou indirectement, sur lesdits bras.

Selon un mode de réalisation, ledit système de guidage additionnel comprend des moyens de régulation thermique aptes à délivrer un flux de fluide de régulation thermique, en particulier d'air, en direction du rouleau de compactage, afin de réguler en température, en particulier refroidir, ledit rouleau de compactage par l'extérieur, lesdits moyens de régulation comprenant par exemple des canaux, formés dans des barres du système de guidage, alimentés en un fluide de régulation, par exemple via des tuyaux flexibles. Selon un mode de réalisation, lesdits moyens de régulation sont aptes à injecter un fluide de régulation thermique à température ambiante, de préférence comprise entre 15°C et 30°C, ou un fluide de régulation thermique refroidi à une température inférieure à 15°C, de préférence un gaz à température ambiante ou refroidi, de préférence de l'air à température ambiante, afin de refroidir le rouleau de compactage.

Selon un mode de réalisation, la tête est une tête dite de placement de fibres pour l'application au contact sur un outillage d'une bande large formée de plusieurs fibres plates continues. Ledit système de guidage principal est alors apte à guider une pluralité de fibres vers le rouleau d'application sous la forme d'une bande. Ladite tête comprend alors avantageusement des moyens de coupe pour couper, de préférence individuellement, chaque fibre en amont du rouleau par rapport au sens de défilement des fibres, et des moyens de réacheminement, disposés en amont des moyens de coupe, pour réacheminer chaque fibre venant d'être coupée afin de pouvoir à tout moment stopper et reprendre l'application d'une bande, ainsi que choisir la largeur de la bande. Avantageusement, la tête comprend en outre des moyens de blocage, disposés en amont des moyens de coupe, aptes à bloquer, de préférence individuellement, chaque fibre venant d'être coupée

Selon un autre mode de réalisation, la tête est prévue pour l'application au contact sur un outillage d'une bande formée d'une seule fibre plate sous la forme d'un large ruban. Dans ce cas, la tête comprend un système de guidage principal apte à guider une seule fibre plate en direction du rouleau.

Selon un mode de réalisation, le système de guidage principal comprend des premiers et seconds moyens de guidage disposés en quinconce selon deux plans de guidage se rapprochant l'un de l'autre d'amont en aval pour guider les fibres vers le rouleau sous la forme de deux nappes de fibres, les premiers et seconds moyens de guidage comprenant de préférence des premiers canaux et des second canaux, formés par exemple dans une ou plusieurs plaques assemblées les unes aux autres, lesdits canaux débouchant sur le bord inférieur de la ou des plaques. Les fibres de la première nappe passent dans des premiers canaux formés par exemple à l'interface d'assemblage entre une première plaque extérieure et une plaque centrale et les fibres de la seconde nappe passent dans des seconds canaux formés à l'interface d'assemblage entre la plaque centrale et une deuxième plaque extérieure.

Selon un mode de réalisation, les premiers et seconds moyens de guidage additionnels comprennent respectivement une première barre et une deuxième barre, chacune munie de premiers canaux additionnels et de seconds canaux additionnels disposés en quinconce, et venant dans le prolongement des premiers et seconds canaux du système de guidage principal dans les première et deuxième positions du rouleau d'application.

Selon un mode de réalisation, chaque barre présente de préférence une section transversale de forme générale triangulaire, avec une surface supérieure apte à venir en vis-à-vis du bord aval du système de guidage principal, une surface externe orientée vers l'extérieur, et une surface interne orientée vers le rouleau d'application, les premiers canaux et les seconds canaux additionnels sont ouverts et sont formés de rainures ménagées sur les surfaces interne et externe des barres. Selon un mode de réalisation, chaque barre présente une surface interne concave dont la concavité correspond à la surface du rouleau, les rainures ménagées sur la surface interne concave formant des canaux incurvés. Selon un mode de réalisation, lesdites barres sont montées directement ou indirectement sur lesdits bras, le bord aval du système de guidage principal présente une surface convexe cylindrique, et les barres présentent une surface supérieure concave de forme correspondante. Les rainures ménagées sur les surfaces externes des barres peuvent être recouvertes par au moins une plaque de guidage montée de manière amovible contre lesdites surfaces externes.

Selon un mode de réalisation, dans la première position du rouleau, le système de guidage additionnel est bloqué en rotation par les moyens de blocage de sorte que sa première barre soit contre le bord aval du ou des plaques, avec ses premiers et seconds canaux disposés dans le prolongement des premiers et seconds canaux du système de guidage principal, et dans la deuxième position du rouleau, le système de guidage additionnel est bloqué en rotation par les moyens de blocage de sorte que sa deuxième barre soit contre le bord aval du ou des plaques, ses premiers et seconds canaux disposés dans le prolongement des premiers et seconds canaux du système de guidage principal.

Selon un mode de réalisation, les moyens de blocage comprennent des aimants montés sur la première et la deuxième barres, aptes à coopérer avec des aimants montés sur le ou les bords aval de la ou des plaques.

Selon un mode de réalisation, ledit rouleau d'application est apte à être manoeuvré entre ses deux positions par des moyens d'actionnement, lesdits moyens d'actionnement étant de préférence aptes à agir sur au moins l'un desdits bras pour manoeuvrer ledit rouleau entre ses deux positions.

Selon un mode de réalisation, ledit système de guidage principal présente un plan moyen, de préférence de symétrie, l'axe de rotation du rouleau d'application dans sa première position et dans sa deuxième position étant disposé, de préférence symétriquement de part et d'autre dudit plan moyen, ledit plan moyen étant avantageusement disposé sensiblement tangentiellement à la surface cylindrique du rouleau d'application, ou au-delà de ladite surface cylindrique par rapport à l'axe de rotation dans les première et deuxième positions du rouleau d'application. Lorsque le système de guidage principal présente qu'un seul plan de guidage de fibre, ledit plan moyen correspond audit plan de guidage. Lorsque le système de guidage principal présente deux plans de guidage de fibre, ceux-ci sont disposés symétriquement de part et d'autre dudit plan moyen.

Selon un mode de réalisation, les deux plans de guidage sont disposés symétriquement de part et d'autre du plan moyen, et sont sensiblement tangents à la première portion de la surface cylindrique du rouleau, lorsque que ce dernier est dans sa première position, et sensiblement tangents à la deuxième portion de la surface cylindrique du rouleau, lorsque que ce dernier est dans sa deuxième position. Ledit plan moyen est avantageusement disposé sensiblement tangentiellement à la surface cylindrique du rouleau, ou au-delà de ladite surface cylindrique par rapport à l'axe de rotation dans les première et deuxième positions du rouleau, ceci afin d'éviter une double courbure des fibres d'une nappe dans chaque position du rouleau.

Selon un mode de réalisation, ledit plan moyen est avantageusement disposé au-delà de ladite surface cylindrique par rapport à l'axe de rotation dans les première et deuxième positions du rouleau, le système de guidage additionnel comprenant des premiers canaux incurvés et/ou des seconds canaux incurvés pour guider les fibres vers le rouleau, de préférence des premiers canaux incurvés et des seconds canaux droits.

Selon un mode de réalisation, la tête d'application de fibres comprend en outre un système de chauffage comprenant des premiers moyens de chauffage aptes à émettre un rayonnement thermique en direction de la bande de fibres avant son compactage et/ou en direction du moule ou des bandes de fibres déjà appliquées en amont du rouleau de compactage par rapport à la direction d'avancement de la tête lorsque le rouleau est dans sa première position, et des seconds moyens de chauffage aptes à délivrer un rayonnement thermique en direction de la bande de fibres avant son compactage et/ou en direction du moule ou des bandes de fibres déjà appliquées lorsque le rouleau est dans sa deuxième position, de préférence, ledit système de chauffage, de type laser, comprend une source laser déportée apte à émettre un faisceau laser, et des moyens de transmission et de répartition connectés à ladite source laser, et aptes à délivrer le faisceau laser émis par la source vers les premiers ou seconds moyens de chauffage en fonction de la position du rouleau. Selon l'invention, une seule source laser est utilisée pour le chauffage dans les deux directions opposées de la tête.

Les moyens de transmission et de répartition comprennent par exemple au moins une fibre optique pour la transmission du faisceau laser de ladite source jusqu'à un système de répartition, par exemple monté fixe par rapport au système de guidage principal, délivrant ledit faisceau laser vers des systèmes optiques constituants lesdits premiers et seconds moyens de chauffage. En variante, le système de répartition, par exemple de type obturateur, est connecté à la source laser, directement ou via une fibre optique, et est apte à délivrer le faisceau vers une première fibre optique ou une deuxième fibre optique, chacune équipée en extrémité de systèmes optiques constituants lesdits premiers et seconds moyens de chauffage.

Selon un mode de réalisation, ledit rouleau est monté rotatif entre deux pièces d'assemblage, par exemple formant paliers, par lesquelles ledit rouleau est monté de manière amovible via des moyens d'assemblage aux extrémité desdits bras, lesdits moyens d'assemblage étant de préférence de type pneumatique ou comprenant de préférence des aimants, montés sur lesdites pièces d'assemblage aptes, à coopérer avec des aimants complémentaires montés aux extrémités des bras pour permettre un assemblage magnétique des pièces aux bras. Dans le cas d'un système de guidage additionnel, le montage/démontage aisé du rouleau, notamment par des moyens d'assemblage magnétique, facilite la mise en place des fibres en début de drapage.

Selon un mode de réalisation, que le système de guidage additionnel est monté sur lesdites pièces d'assemblage.

Pour garantir un compactage sensiblement uniforme sur toute la largeur de la bande, la tête comprend avantageusement un rouleau de compactage apte à s'adapter à la surface d'application, notamment à des surfaces d'application convexes et/ou concaves. Selon un mode de réalisation, la tête comprend un rouleau souple, réalisé en un matériau dit souple, déformable élastiquement, par exemple en matériau élastomère, de manière à pouvoir se déformer en épousant le profil desdites surfaces.

Selon un autre mode de réalisation, le rouleau est un rouleau rigide segmenté, par exemple métallique, comprenant plusieurs segments de rouleau indépendants montés côte à côte sur une même tige axiale, chaque segment étant déplaçable sur ladite tige axiale, perpendiculairement à cette dernière, de manière indépendante, et étant sollicité élastiquement contre la surface d'application par des moyens élastiques, tels que des systèmes à poche expansible.

La présente invention a également pour objet une machine d'application de fibres comprenant une tête telle que définie précédemment, et un système de déplacement de ladite tête machine, avec une unité de commande apte à commander la manoeuvre du rouleau entre ses deux positions, et à commander le déplacement de la tête selon une trajectoire paramétrée en utilisant deux points d'origine différents en fonction de la position du rouleau.

L'invention sera mieux comprise, et d'autres buts, détails, caractéristiques et avantages apparaîtront plus clairement au cours de la description explicative détaillée qui va suivre de deux modes de réalisations particuliers actuellement préférés de l'invention, en référence aux dessins schématiques annexés sur lesquels :
- les figures 1 et 2 sont respectivement des vues schématiques en perspective et de côté d'une tête d'application de fibres selon l'invention, le rouleau étant dans sa première position dite droite, pour l'application de fibres dans la première direction S1 dite gauche ;
- la figure 3 est une vue partielle agrandie de face de la tête de la figure 1 ;
- la figure 4 est une vue partielle en perspective de la tête de la figure 1 ;
- la figure 5 est une vue agrandie du détail D de la figure 4 ;
- la figure 6 est une partielle selon le plan de coupe VI-VI de la figure 3, le rouleau d'application étant dans sa position droite ;
- la figure 7 est une vue analogue à celle de la figure 6, le rouleau d'application étant dans sa deuxième position, dite gauche, pour l'application de fibres dans la deuxième direction S2 dite droite ;
- la figure 8 est une vue partielle selon le plan de coupe VIII-VIII de la figure 3, illustrant le passage de fibres F1 de la première nappe dans les premiers canaux de guidage additionnels ;
- la figure 9 est une partielle selon le plan de coupe IX-IX de la figure 3, illustrant le passage de fibres F2 de la seconde nappe dans les seconds canaux de guidage additionnels ;
- la figure 10 est une vue de côté analogue à celle de la figure 2, le rouleau d'application étant dans une position médiane, entre sa position droite et sa position gauche ;
- les figures 11 et 12 sont des vues schématiques partielles de côté d'une tête d'application de fibres selon un autre mode de réalisation, en en position droite, respectivement avec et sans plaque de guidage sur l'une des barres du système de guidage additionnel ;
- les figures 13 et 14 sont respectivement des vues schématiques de côté et de face de la tête de la figure 12 ; et,
- les figures 15 et 16 sont respectivement des vues selon les plans de coupe XV-XV et XVI-XVI de la figure 14.

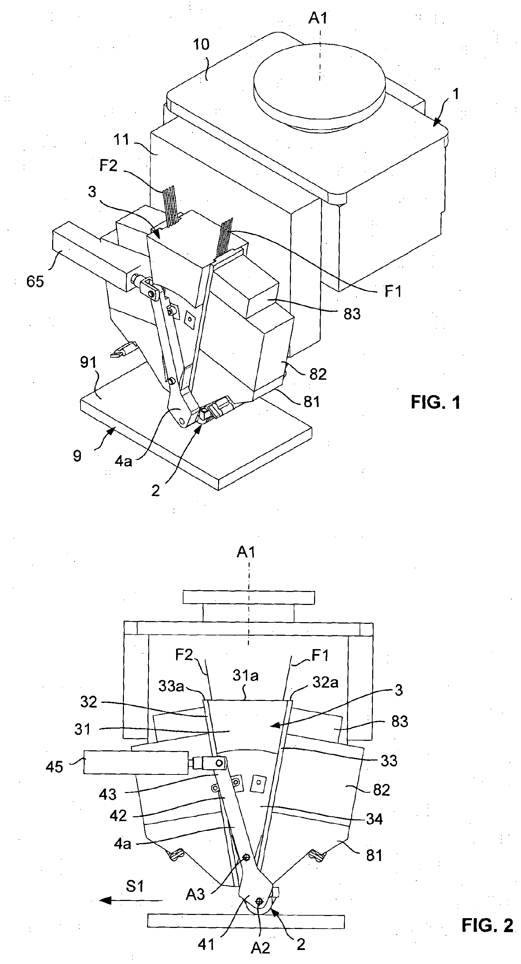

Les figures 1 et 2 illustrent partiellement une tête 1 d'application de fibres selon l'invention, prévue ici pour l'application sur la surface d'application 91 d'un moule 9 d'une bande formée de plusieurs fibres F1, F2, par exemple pré-imprégnées de résine. La tête 1 comprend un rouleau 2 d'application, appelé également rouleau de compactage, et un système de guidage, dit principal, 3 permettant de guider les fibres entrant dans la tête en direction du rouleau sous la forme de deux nappes de fibres, pour former une bande de fibres dans laquelle les fibres sont disposées sensiblement bord à bord.

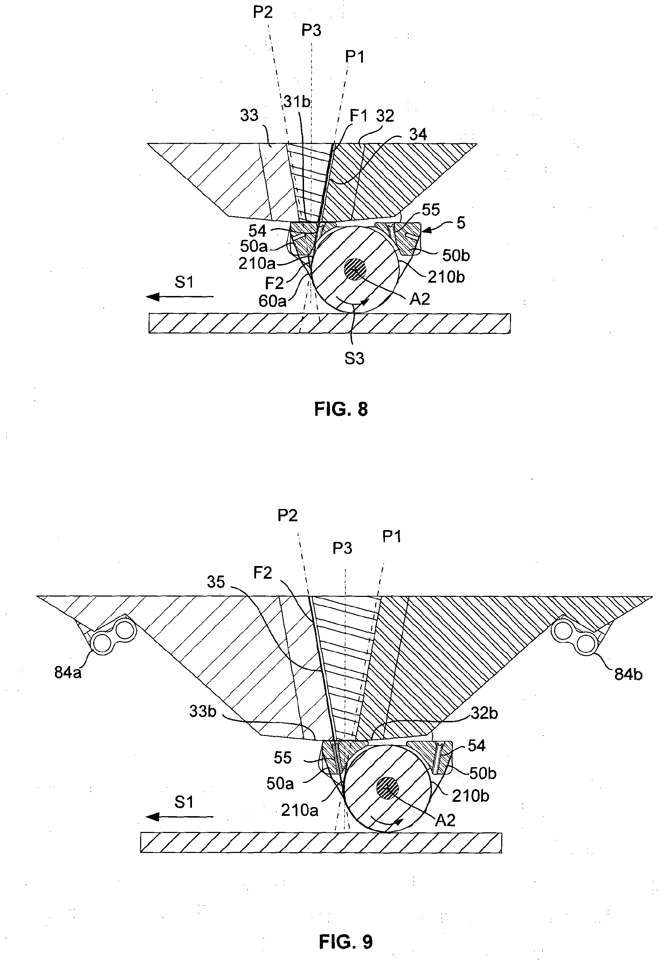

Le système de guidage principal 3 est du type de celui décrit dans le document brevet WO2008132299 précité. En référence aux figures 2, 8 et 9, il comprend trois pièces ou plaques 31, 32, 33, de préférence métalliques, montées à plat les unes contre les autres pour définir entre elles des premiers canaux 34 (Fig. 8) de guidage et des seconds canaux 35 (Fig. 9) de guidage dans lesquels passent respectivement des premières fibres F1 de la première nappe et des secondes fibres F2 de la seconde nappe. Une première plaque extérieure 32 et une seconde plaque 33 extérieure sont montées sur les faces principales inclinées d'une plaque centrale 31 de section triangulaire. Les premiers et seconds canaux 34, 35 débouchent sur les bords amont 31a, 32a, 33a des plaques et les bords aval 31b, 32b, 33b des plaques. Les premiers canaux et les seconds canaux sont disposés en quinconce, selon deux plans P1, P2 de guidage se rapprochant l'un de l'autre d'amont en aval de sorte que les fibres F1 et F2 des deux nappes soient sensiblement disposées bord à bord au niveau du rouleau d'application. Les plans P1, P2 de guidage sont disposés symétriquement de part et d'autre du plan P3 médian de symétrie du système de guidage.

La tête comprend une structure support 10 par laquelle la tête peut être assemblée sur un système de déplacement apte à déplacer la tête selon au moins trois directions perpendiculaires les unes aux autres, tel qu'un robot comprenant un poignet ou bras poly-articulé à l'extrémité duquel est montée ladite tête d'application, selon un axe A1 d'assemblage. Le système de guidage principal 3 est assemblé sur un élément 11 de support monté sur la structure support 10, son plan P3 de symétrie étant disposé dans une direction dite verticale, qui est ici parallèlement à l'axe A1 d'assemblage de la tête au système de déplacement. L'élément 11 de support est monté mobile dans la direction verticale sur la structure support et est sollicité verticalement vers le bas par au moins un vérin de compactage (non représenté) qui définit la force de compactage avec laquelle les fibres sont appliquées sur le moule via le rouleau. Le vérin de compactage, par exemple pneumatique, est commandé en pression pour adapter la force de compactage.

Dans le présent mode de réalisation, la tête est prévue pour l'application de bandes de huit fibres, chaque nappe comprenant quatre fibres, le système de guidage principal comprenant quatre premiers canaux et quatre second canaux.

Les fibres sont acheminées depuis des moyens de stockage (non représentés) jusqu'à la tête via des moyens d'acheminement (non représentés). Les moyens de stockage de fibres peuvent comprendre un cantre dans le cas de fibres conditionnées sous forme de bobines. Les moyens d'acheminement peuvent être formés de tubes flexibles, chaque tube recevant une fibre dans son passage interne.

La tête comprend en outre, de part et d'autre du système de guidage, des moyens de coupe, représentés schématiquement sous la référence 81, pour couper individuellement chaque fibre passant dans les systèmes de guidage, des moyens de réacheminement, représentés schématiquement sous la référence 82, pour réacheminer individuellement jusqu'au rouleau chaque fibre venant d'être coupée, ainsi que de préférence des moyens de blocage, représentés schématiquement sous la référence 83, pour bloquer chaque fibre venant d'être coupée.

Selon l'invention, le rouleau 2 est monté pivotant par rapport au système de guidage principal 3. Le rouleau est ici un rouleau souple comprenant un cylindre 21 en matériau élastomère monté sur une tige 22 axiale rigide. Le rouleau est monté rotatif autour d'un axe A2 de rotation par les extrémités de sa tige 22 axiale aux extrémités inférieures 41 de deux bras 4a, 4b s'étendant de part et d'autre des faces latérales du système de guidage. Chaque bras est monté pivotant sur la face latérale 34 de la plaque centrale autour d'un axe A3 de pivotement.

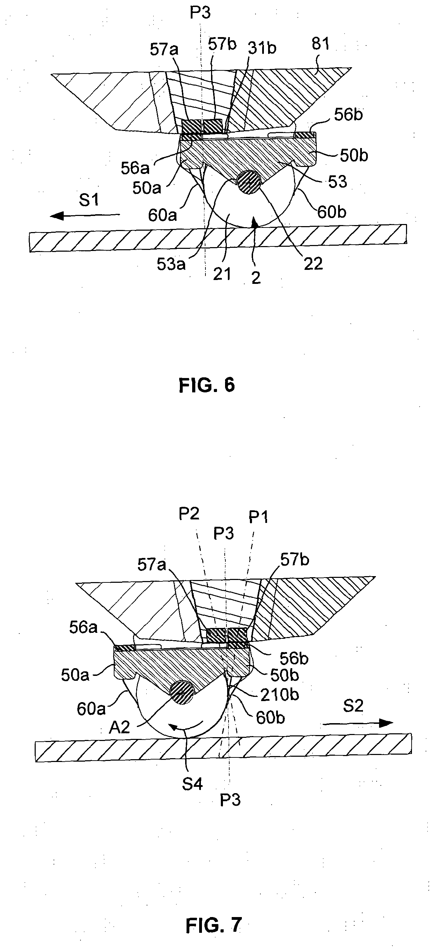

Les bras 4a, 4b sont aptes à pivoter autour de l'axe de pivotement pour déplacer le rouleau sous les bords aval 31b, 32b, 33b des plaques entre première position, illustrée aux figures 1, 2, 6, 8 et 9, et une deuxième position illustrée à la figure 7. Les deux positions sont symétriques de part et d'autre du plan P3 de symétrie. En référence à la figure 9, dans la première position, dite droite, l'axe A2 du rouleau est positionné à droite du plan P3 de symétrie, de manière à guider les fibres du côté gauche du rouleau. Le rouleau est positionné de sorte que les deux plans de guidage P1 et P2 soient sensiblement tangents à une première portion 210a de la surface extérieure cylindrique du rouleau. Par rapport au sens S3 de rotation du rouleau, la génératrice de contact du plan P1 avec la surface extérieure du rouleau est disposée en amont de la génératrice de contact du plan P2 avec la surface extérieure du rouleau. En référence à la figure 7, dans la deuxième position, dite gauche, l'axe A2 du rouleau est positionné à gauche du plan P3 de symétrie, de manière à guider les fibres du côté droit du rouleau. Les deux plans P1, P2 de guidage sont sensiblement tangents à une deuxième portion 210b de la surface extérieure cylindrique du rouleau. Par rapport au sens S4 de rotation du rouleau, la génératrice de contact du plan P2 avec la surface extérieure du rouleau est disposée en amont de la génératrice de contact du plan P1 avec la surface extérieure du rouleau.

Dans le présent mode de réalisation illustré, le plan de symétrie P3 est en outre disposé tangentiellement à la première portion 210a de la surface extérieure cylindrique du rouleau dans sa position droite, et tangentiellement à la deuxième portion 210b de la surface extérieure cylindrique du rouleau dans sa position gauche. Le rouleau est manoeuvré entre ses deux positions par des moyens d'actionnement 45. Dans le présent mode de réalisation, au moins l'un des bras 4a présente une portion supérieure 42 s'étendant au delà de l'axe A3 de pivotement, les moyens d'actionnement sont formés d'un vérin 45, dont le corps est monté fixe par rapport au système de guidage principal 3 et dont l'extrémité de la tige de piston est assemblée à l'extrémité supérieure 43 du bras.

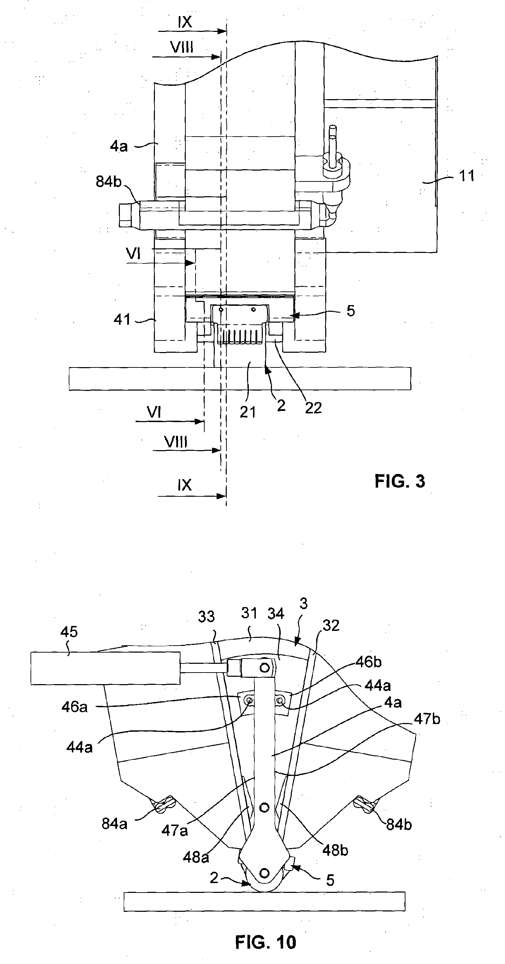

Des moyens de blocage sont de préférence prévus pour assurer le blocage le rouleau dans chacune de ses deux positions. Ces moyens de blocage agissent de préférence sur le bras 4a relié aux moyens d'actionnement 45, et comprennent par exemple, en référence à la figure 10, deux vérins 46a, 46b montés dans la plaque centrale 31 et dont les tiges, disposées parallèlement à l'axe A3 de pivotement, sont aptes à être déplacées dans une position active, en saillie par rapport à la face latérale 34 de la plaque centrale. La tige d'un premier vérin 46a en position active vient dans une première ouverture 44a du bras dans la position droite du rouleau, et la tige du deuxième vérin 46b en position active vient dans une deuxième ouverture 44b du bras dans sa position gauche. Pour éviter un report d'effort sur le vérin 45 lors du drapage, au moins ledit bras 4a actionné par le vérin vient en appui par un bord latéral 47a contre une première butée 48a de la face latérale du système de guidage, en particulier de la face latérale de la plaque centrale, lorsque le rouleau est dans sa position droite, et vient en appui par son autre bord latéral 47b contre une deuxième butée 48b de ladite face latérale lorsque le rouleau est dans sa position gauche. De préférence, les deux bras viennent contre des butées dans les positions droite et gauche du rouleau.

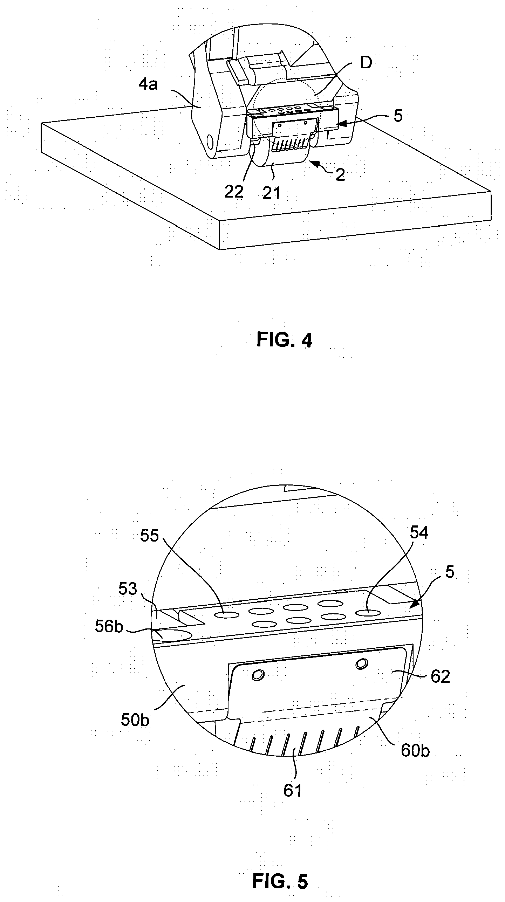

La tête comprend en outre un système de guidage 5 additionnel mobile, positionné entre le système de guidage 3 principal et le rouleau, pour guider les fibres au plus près du rouleau. En référence aux figures 6 à 9, ce système de guidage additionnel comprend deux barres 50a, 50b disposées parallèlement à l'axe A2 de rotation, et reliées entre elles en extrémité par deux traverses 53 montées pivotantes sur la tige axiale 22 du rouleau. Chaque traverse 53 présente sur son bord inférieur une échancrure 53a (Fig. 6) semi-circulaire, et est disposée entre le rouleau et un bras 4a, 4b en reposant par son échancrure sur la tige axiale. Le système de guidage additionnel pivote ainsi librement autour de l'axe A2 de rotation. En référence à la figure 5, chaque barre présente deux rangées parallèles de canaux de guidage additionnels. Chaque canal débouche sur la face supérieure et la face inférieure de la barre. Les premiers canaux 54 additionnels d'une première rangée et les seconds canaux 55 additionnels de la deuxième rangée sont disposés en quinconce. Les premiers de canaux 54 additionnels sont destinés au guidage des fibres F1 de la première nappe, tandis que les seconds canaux 55 additionnels sont destinés au guidage des fibres de la seconde nappe.

Chaque barre est munie sur sa face supérieure, de part et d'autre des rangées de canaux, d'aimants 56a, 56b logés dans des logements, aptes à coopérer avec des aimants 57a, 57b complémentaires, présents sur le bord aval 31b de la plaque centrale, logés dans des logements de ce dernier, pour bloquer en rotation le système de guidage, en amenant le système 5 de guidage additionnel contre le système 3 de guidage. Tel qu'illustré à la figure 6, lorsque le rouleau est dans sa position droite, le système de guidage additionnel est bloqué en rotation par les aimants 56a de première barre 50a qui coopèrent avec les aimants 57a du système de guidage principal 3. Tel qu'illustré à la figure 9, la première barre 50a est maintenue en appui par sa surface supérieure contre le bord aval 31b de la plaque centrale 31, ainsi que contre ceux 32b, 33b des plaques 32, 33 extérieures au niveau des premier et second canaux 34, 35, de sorte que ses premiers canaux 54 additionnels soient disposés dans le prolongement des premiers canaux 34 de guidage de la première nappe et que ses seconds canaux 55 additionnels de la deuxième rangée soient disposés dans le prolongement des premiers canaux 35 de la première nappe.

De manière analogue, tel qu'illustré à la figure 7, lorsque le rouleau est dans sa position gauche, le système de guidage additionnel est bloqué en rotation par les aimants 56b de deuxième barre 50b qui coopèrent avec les aimants 57b du système de guidage 3 principal. Tel qu'illustré à la figure 9, la deuxième barre 50a est maintenue en appui par sa surface supérieure contre les bords aval 31b, 32b, 33b des plaques, de sorte que ses premiers et seconds canaux 54, 55 additionnels soient disposés respectivement dans le prolongement des premiers et seconds canaux 34, 35 de guidage.

Les canaux 34, 35 et les canaux additionnel 54, 55 présentent avantageusement une section transversale rectangulaire, correspondant sensiblement à la largeur d'une fibre. Comme visible sur les figures 8 et 9, les canaux additionnels présentent de préférence une portion supérieure tronconique, se réduisant d'amont en aval, de diamètre supérieure à la section rectangulaire des canaux, afin d'autoriser un léger désalignement des canaux 34, 35 et des canaux additionnels 54, et faciliter ainsi le passage des fibres du système de guidage 3 principal vers le système de guidage additionnel.

De préférence, les aimants sont légèrement en retrait dans leurs logements respectifs, les forces d'attraction des aimants garantissant un blocage en rotation du système de guidage additionnel, sans être en contact en eux.

En référence aux figures 5 à 9, le système de guidage additionnel comprend en outre un premier peigne 60a monté sur la première barre 50a et un second peigne 60b monté sur la deuxième barre 50b. Chaque peigne comprend une pluralité de languettes flexibles 61 qui viennent appuyer sur les faces des fibres opposées au rouleau pour plaquer lesdites fibres contre le rouleau, tel que décrit dans la demande de brevet internationale n° PCT/FR2011/052022, déposée le 02/09/2011 par la Demanderesse. Chaque peigne comprend une base 62 par laquelle le peigne est monté à plat contre la face extérieure de sa barre, ladite base portant les languettes flexibles 41. Le peigne est par exemple formé d'une plaque sensiblement rectangulaire, de préférence métallique, munie d'une pluralité de fentes pour former lesdites languettes. Les languettes viennent sensiblement tangentiellement et élastiquement en appui par leur portion d'extrémité libre contre la surface cylindrique du rouleau, en amont de la génératrice de contact du rouleau avec la surface d'application du moule. Le peigne comprend huit languettes flexibles, chaque languette présente une largeur légèrement inférieure à celle d'une fibre et est destinée à venir en appui contre une fibre.

Pour le drapage d'une bande de fibre sur un moule dans la direction droite S2, le rouleau est amené dans sa position gauche. Les fibres F1, F2 guidées dans les canaux 34, 35 du système de guidage 3 principal sont ensuite guidées dans les canaux additionnels 54, 55 de la barre 50a. En sortie des canaux additionnels, les fibres sont pincées entre les languettes flexibles et la surface du rouleau, en amont de la génératrice de contact du rouleau avec le moule. Le rouleau applique la bande de fibres sur le moule en tournant dans le sens S3 antihoraire sur les figures 6 à 9.

Pour le drapage d'une bande de fibre dans la direction gauche S2, S2, le rouleau est amené dans sa position droite. Les fibres F1, F2 sortant des canaux 34, 35 sont ensuite guidées dans les canaux additionnels 54, 55 de la barre 50b, puis pincées entre les languettes flexibles et la surface du rouleau. Le rouleau applique la bande de fibres en tournant dans le sens S4 horaire.

Tel qu'illustré à la figure 10, au cours du pivotement du rouleau entre ses deux positions, le système de guidage additionnel pivote librement autour de l'axe A2, jusqu'au moment où les aimants exercent leur force d'attraction pour bloquer le système 5 de guidage additionnel et l'amener contre le système 3 de guidage.

La tête comprend en outre un système de chauffage, par exemple de type lampe infrarouge, pour chauffer dans chacune des directions S1 et S2 les fibres sortant du système de guidage additionnel, et/ou le moule ou les bandes de fibres déjà appliquées en amont du rouleau de compactage, juste avant le compactage de la bande, afin d'au moins ramollir la résine de pré-imprégnation ou la résine de liaison, et ainsi favoriser l'adhésion des bandes entre elles. Une première lampe infrarouge 84a assure le chauffage des fibres lors du drapage dans la direction droite et une seconde lampe infrarouge 84b assure le chauffage des fibres lors du drapage dans la direction gauche. En variante, le système de chauffage est de type laser. Une source laser, déportée par rapport à la tête, est connectée via une fibre optique ou directement à un système de répartition, également déporté par rapport à la tête. Un premier système optique et un second système optique sont montés sur le système de guidage principal, symétriquement de part et d'autre du plan P3, et sont chacun connectés via une fibre optique au système de répartition pour respectivement assurer le chauffage des fibres lors du drapage dans la direction droite et dans la direction gauche.

Le système de guidage additionnel empêche l'accès au système de guidage principal pour le positionnement manuel des fibres dans ses canaux avant drapage. Selon une variante de réalisation, la tige axiale du rouleau est montée en extrémité à deux paliers montés de manière amovible aux extrémités des bras via des moyens d'assemblage magnétiques. Chaque palier comprend par exemple deux aimants aptes à coopérer avec deux aimants complémentaires à l'extrémité d'un bras. Le désassemblage du rouleau manuellement, sans outils, permet le retrait également du système de guidage additionnel, ce dernier restant lié audit rouleau via ses peignes venant de part et d'autre du rouleau. Après désassemblage, les fibres peuvent être tirées manuellement au-delà des bords d'extrémité des plaques du système de guidage principal. Les vérins de coupe sont alors actionnés pour couper les fibres de la nappe. Après remise en place du rouleau avec son système de guidage additionnel, les fibres peuvent être réacheminées via les moyens de réacheminement jusqu'au rouleau, en passant par les canaux du système de guidage additionnel.

La machine d'application de fibres équipée d'une tête selon l'invention comprend une unité de commande apte à commander la manoeuvre du rouleau entre ses deux positions. Dans le logiciel de programmation de l'unité de commande, la trajectoire est paramétrée de la tête en fonction de la position de son rouleau. Le point origine pour paramétrer la trajectoire correspond par exemple au milieu de la génératrice du rouleau au contact de la surface, deux points d'origine différents étant utilisés en fonction de la position du rouleau.

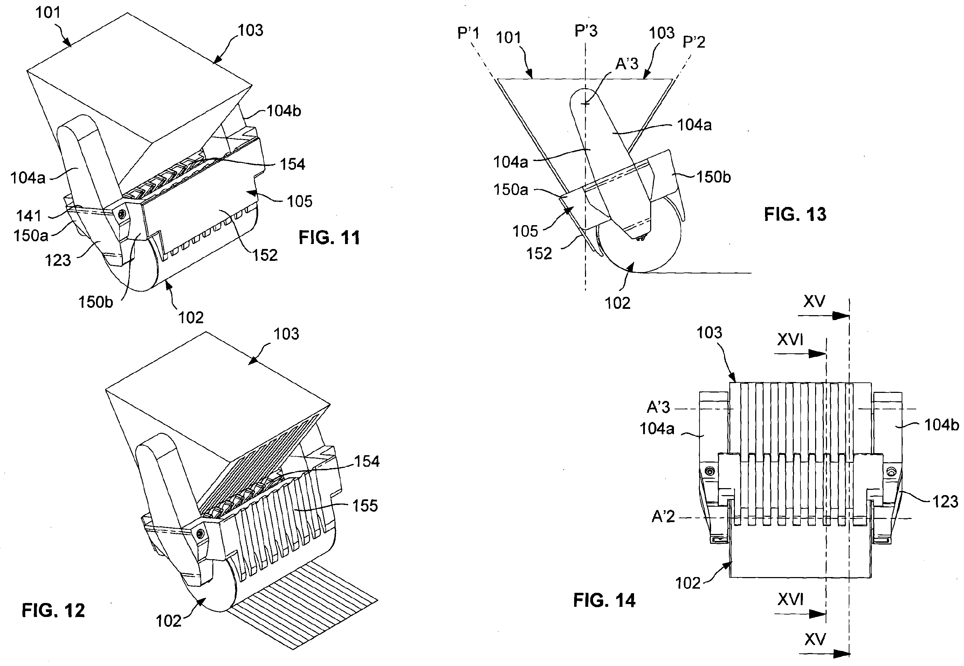

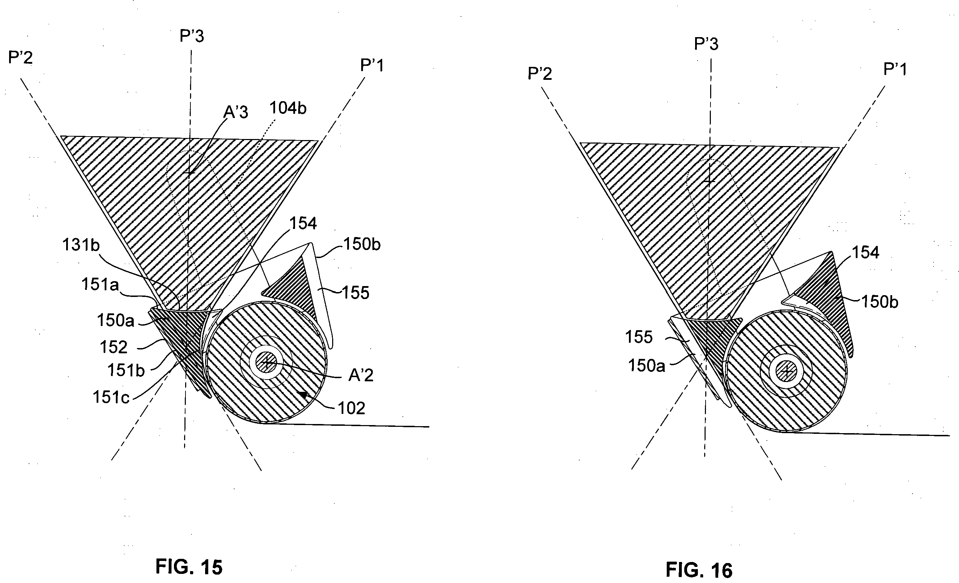

Les figures 11 à 16 illustrent une tête 101 d'application de fibres selon un autre mode de réalisation. La tête comprend comme précédemment un système de guidage principal, représenté partiellement et schématiquement sous la référence 103, pour guider les fibres en direction du rouleau 102 sous la forme de deux nappes de fibres, comprenant des premiers et seconds canaux (non représentés) disposés selon deux plans de guidage P'1, P'2 se rapprochant l'un de l'autre d'amont en aval. Les deux plans P'1 et P'2, illustrés schématiquement sur les figures, sont disposés symétriquement de part et d'autre du plan P'3 médian de symétrie du système de guidage principal. Les premiers et seconds canaux débouchent sur un bord aval 131b (Fig. 15) du système de guidage principal. Le rouleau 102 de compactage comprend un cylindre en matériau élastomère monté sur une tige axiale rigide, et est monté rotatif autour d'un axe A'2 de rotation par les extrémités de sa tige axiale aux extrémités inférieures 141 de deux bras 104a, 104b s'étendant de part et d'autre des faces latérales du système de guidage et montés pivotant autour d'un axe A'3 de pivotement. La tige axiale du rouleau est montée en extrémité à deux paliers 123 assemblés de manière amovible aux extrémités des bras, par exemple via des moyens d'assemblage pneumatiques.

Comme précédemment, un système de guidage 105 additionnel mobile est positionné entre le système de guidage 103 principal et le rouleau pour guider les fibres au plus près du rouleau. Dans ce mode de réalisation, le système de guidage est assemblé indirectement aux bras 104a, 104b pivotant. Le système de guidage additionnel est monté fixe entre les deux paliers 123, l'ensemble pouvant être démonté des bras via les moyens d'assemblage pneumatique. Ce système de guidage additionnel comprend deux barres 150a, 150b disposées parallèlement à l'axe A2 de rotation, assemblées de part et d'autre des paliers, chaque barre étant assemblée par ses extrémités aux paliers, de préférence de manière amovible.

En référence à la figure 15, chaque barre présente en section transversale une forme générale triangulaire, en coin, avec une surface dite supérieure 151a orientée vers le système de guidage principal, une surface dite externe 151b, sensiblement plane, orientée vers l'extérieur, et une surface dite interne 151c, concave, orientée vers le rouleau et dont la concavité correspond à la surface du rouleau. Chaque barre comprend deux rangées parallèles de canaux de guidage additionnels. Les premiers canaux 154 additionnels d'une première rangée et les seconds canaux 155 additionnels de la deuxième rangée sont disposés en quinconce. Dans ce mode de réalisation, les canaux sont ouverts et sont formés de rainures ménagées sur les surfaces interne et externe des barres. Les premiers canaux 154, dits incurvés, sont formées de rainures ménagées sur la surface interne 151c concave des barres et débouchant sur la surface supérieure 151a, et les seconds canaux 155 sont formés de rainures ménagées sur la surface externe 151b et débouchant sur la surface supérieure 151a et la surface interne 151c.

Pour un positionnement au plus près du système de guidage additionnel par rapport au système de guidage principal, le bord aval 131b du système de guidage principal présente une surface convexe cylindrique, et les barres du système de guidage additionnel présentent une surface supérieure 151a concave de forme correspondante. Ces surfaces concave et convexe ont des rayons de courbures dont les axes sont confondus avec l'axe A'3 de rotation des bras. Les rayons de courbure sont définis de manière à former un faible jeu entre ces deux surfaces, par exemple d'environ 0,5mm.

Dans ses positions droite et gauche, le plan P'3 n'est pas tangent à la surface cylindrique du rouleau mais disposé au-delà ladite surface cylindrique par rapport à l'axe de rotation. Dans la position droite illustrée sur les figures 15 et 16, la première barre 150a est disposée en vis-à-vis du bord aval 131b système de guidage principal, ses premiers canaux 154 additionnels sont disposés dans le prolongement des premiers canaux de guidage de la première nappe disposée selon le plan P'1, et ses seconds canaux 155 additionnels sont disposés dans le prolongement des seconds canaux de la deuxième nappe disposée selon le plan P'2. Le plan P'2 est disposé sensiblement tangentiellement à la surface du rouleau. Tel qu'illustré à la figure 15, lors de leur réacheminement, les fibres de la première nappe sortant du système de guidage principal entrent dans les seconds canaux incurvés 154 et sont ainsi guidées vers le rouleau. Lorsque ces fibres sont déposées par le rouleau sur une surface de drapage, les canaux de guidage du système de guidage principal sont avantageusement dimensionnés pour permettre l'acheminement des fibres selon un plan P'1 sensiblement tangentiel à la surface du rouleau.

Pour garantir le maintien des fibres dans les rainures formant les seconds canaux 155 des barres, celles-ci sont refermées par une plaque de guidage 152 montée de manière amovible sur les barres, contre les surfaces externes 150b des barres. Par rapport aux canaux 54, 55 du système de guidage additionnel de la tête des figures 1 à 10, formés de perçages à travers le corps des barres, les canaux ouverts 154, 155 de ce système guidage additionnel peuvent être nettoyés aisément, les seconds canaux 155 pouvant être nettoyés après retrait des plaques de guidage 152.

De manière analogue, lorsque le rouleau est dans sa position gauche, la deuxième barre 150b est disposée en vis-à-vis du bord aval du système de guidage principal, ses seconds canaux 155 additionnels sont disposés dans le prolongement des premiers canaux de guidage de la première nappe disposée selon le plan P'1, et ses premiers canaux 154 additionnels sont disposés dans le prolongement des seconds canaux de la deuxième nappe disposée selon le plan P'2.

La tête comprend en outre, tel que décrit précédemment, des moyens d'actionnement pour manoeuvrer le rouleau entre sa position gauche et sa position droite, des moyens de blocage pour assurer le blocage le rouleau dans chacune de ses deux positions, et un système de chauffage pour chauffer dans chacune des directions.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Tête (1, 101) d'application de fibres pour la réalisation de pièces en matériau composite, comprenant un rouleau (2, 102) d'application pour l'application d'une bande formée d'une ou plusieurs fibres (F1, F2) sur la surface (91) d'application d'un moule (9), et un système de guidage (3, 103) principal pour guider au moins une fibre vers ledit rouleau d'application, ledit rouleau d'application est monté mobile par rapport audit système de guidage (3, 103) principal entre une première position, dans laquelle ladite bande est guidée par le système de guidage principal sur une première portion (210a) de la surface cylindrique du rouleau, et une deuxième position dans laquelle ladite bande est guidée sur une deuxième portion (210b) de la surface cylindrique du rouleau, ledit rouleau (2, 102) d'application est monté pivotant autour d'un axe (A3, A'3) de pivotement disposé au-dessus de l'axe (A2, A'2) de rotation du rouleau d'application et parallèlement audit axe de rotation, la manoeuvre du rouleau d'application entre ses deux positions étant réalisée par pivotement dudit rouleau autour dudit axe de pivotement, ledit rouleau étant apte à être manoeuvré entre ses deux positions par des moyens d'actionnement (45), la tête d'application de fibres comprenant en outre un système (5, 105) de guidage additionnel mobile, lié audit rouleau d'application et se déplaçant avec ce dernier entre sa première et sa deuxième positions, comprenant des premiers moyens (50a, 60a; 150a) de guidage additionnels aptes à guider chaque fibre sortant du système de guidage (3) principal vers la première portion (210a) de la surface cylindrique du rouleau dans sa première position, et des seconds moyens (50b, 60b ; 150b) de guidage additionnels aptes à guider chaque fibre sortant du système de guidage (3, 103) principal vers la deuxième portion (210b) de la surface cylindrique du rouleau dans sa deuxième position,
**caractérisée en ce que** la tête d'application de fibres comprend en outre des moyens de blocage (46a, 46b) pour assurer le blocage du rouleau (2, 102) dans chacune de ses deux positions.

2. Tête d'application de fibres selon la revendication 1, **caractérisée en ce que** ledit rouleau (2, 102) d'application est monté rotatif autour de son axe (A2, A'2) de rotation aux extrémités inférieures (41, 141) de deux bras (4a, 4b ; 104a, 104b), s'étendant de part et d'autre du système de guidage principal, chaque bras étant monté pivotant autour dudit axe (A3, A'3) de pivotement.

3. Tête d'application de fibres selon la revendication 1 ou 2, **caractérisée en ce que** le système (5) de guidage additionnel est monté pivotant autour de l'axe (A2) de rotation du rouleau, des moyens (56a, 56b, 57a, 57b) de blocage étant aptes à bloquer en rotation ledit système de guidage additionnel de sorte que les premiers moyens (50a, 60a) de guidage additionnel soient positionnés dans le prolongement du système (3) de guidage lorsque le rouleau (2) est dans sa première position, et que les seconds moyens (50b, 60b) de guidage soient positionnés dans le prolongement du système (3) de guidage lorsque le rouleau est dans sa deuxième position.

4. Tête d'application de fibres selon la revendication 2, **caractérisée en ce que** le système (105) de guidage additionnel est monté sur lesdits bras (104a, 104b).

5. Tête d'application de fibres selon l'une des revendications 1 à 4, **caractérisée en ce que** lesdits premiers et/ou deuxièmes moyens de guidages additionnels comprennent un peigne (60a, 60b) comprenant une pluralité de languettes (61) flexibles aptes à venir contre la ou lesdites fibres sortant des moyens de guidage pour mettre la ou lesdites fibres en appui contre le rouleau d'application.

6. Tête d'application de fibres selon l'une des revendications 1 à 5, **caractérisée en ce que** les premiers et/ou deuxièmes moyens de guidage additionnels comprennent un canal (54, 55 ; 154, 155) de guidage additionnel pour chaque fibre de la bande.

7. Tête d'application de fibres selon l'une des revendications 1 à 6, **caractérisée en ce que** ledit système (5, 105) de guidage additionnel comprend des moyens de régulation thermique aptes à délivrer un flux de fluide de régulation thermique en direction du rouleau, afin de réguler en température ledit rouleau par l'extérieur.

8. Tête d'application de fibres selon l'une des revendications 1 à 7, **caractérisée en ce que** ledit système (3, 103) de guidage principal est apte à guider une pluralité de fibres (F1, F2) vers le rouleau d'application sous la forme d'une bande, le système de guidage principal comprend des premiers et seconds moyens de guidage disposés en quinconce selon deux plans de guidage (P1, P2 ; P'1, P'2) se rapprochant l'un de l'autre d'amont en aval pour guider les fibres (F1, F2) vers le rouleau (2, 102) sous la forme de deux nappes de fibres, les premiers et seconds moyens de guidage comprenant des premiers canaux (34) et des second canaux (35), formés dans une ou plusieurs plaques, lesdits canaux débouchant sur le bord inférieur de la ou des plaques.

9. Tête d'application de fibres selon les revendications 6 et 8, **caractérisée en ce que** les premiers et seconds moyens de guidage additionnels comprennent respectivement une première barre (50a, 150a) et une deuxième barre (50b, 150b), chacune munie de premiers canaux additionnels (54, 154) et de seconds canaux additionnels (55, 155) disposés en quinconce.

10. Tête d'application de fibres selon l'une des revendications 1 à 9, en combinaison avec la revendication 2, **caractérisée en ce que** ledit rouleau d'application (102) est monté rotatif entre deux pièces d'assemblage (123) par lesquelles ledit rouleau d'application est monté de manière amovible via des moyens d'assemblage aux extrémités (141) desdits bras (104a, 104b).

11. Tête d'application de fibres selon les revendications 4 et 10, **caractérisée en ce que** le système (103) de guidage additionnel est monté sur lesdites pièces d'assemblage (123).

12. Tête d'application de fibres selon l'une des revendications 1 à 11, **caractérisée en ce que** ledit système (3, 103) de guidage présente un plan (P3, P'3) moyen, l'axe (A2, A'2) de rotation du rouleau (2, 102) d'application dans sa première position et dans sa deuxième position étant disposé de part et d'autre dudit plan moyen, ledit plan moyen étant disposé sensiblement tangentiellement à la surface cylindrique du rouleau d'application, ou au-delà de ladite surface cylindrique par rapport à l'axe (A2, A'2) de rotation dans les première et deuxième positions du rouleau d'application.

13. Tête d'application de fibres selon l'une des revendications 1 à 12, **caractérisée en ce qu'**elle comprend un système de chauffage comprenant des premiers moyens de chauffage aptes à émettre un rayonnement thermique en direction de la bande de fibres avant son compactage et/ou en direction du moule ou des bandes de fibres déjà appliquées lorsque le rouleau est dans sa première position, et des seconds moyens de chauffage aptes à délivrer un rayonnement thermique en direction de la bande de fibres avant son compactage et/ou en direction du moule ou des bandes de fibres déjà appliquées lorsque le rouleau est dans sa deuxième position, ledit système de chauffage, de type laser, comprenant en outre une source laser et des moyens de transmission et de répartition, connecté à ladite source laser et aptes à délivrer le faisceau laser émis par la source vers les premiers ou seconds moyens de chauffage en fonction de la position du rouleau.

14. Machine d'application de fibres comprenant une tête selon l'une des revendications 1 à 13, et un système de déplacement de ladite tête, **caractérisé en ce qu'**elle comprend une unité de commande apte à commander la manoeuvre du rouleau entre ses deux positions, et à commander le déplacement de la tête selon une trajectoire paramétrée en utilisant deux points d'origine différents en fonction de la position du rouleau.

## Patentansprüche

1. Faserlegekopf (1, 101) zur Ausführen von Teilen aus Verbundmaterial, umfassend eine Legewalze (2, 102) zum Legen eines aus einer oder mehreren Fasern (F1, F2) gebildeten Bandes auf die Legefläche (91) einer Form (9), und ein Hauptführungssystem (3, 103), um mindestens eine Faser zur Legewalze zu führen, wobei die Legewalze in Bezug auf das Hauptführungssystem (3, 103) zwischen einer ersten Stellung, in der das Band vom Hauptführungssystem auf einem ersten Abschnitt (210a) der zylinderförmigen Oberfläche der Walze geführt wird, und einer zweiten Stellung beweglich montiert ist, in der das Band auf einem zweiten Abschnitt (210b) der zylinderförmigen Oberfläche der Walze geführt wird, wobei die Legewalze (2, 102) um eine Schwenkachse (A3, A'3) herum schwenkbar montiert ist, die oberhalb der Drehachse (A2, A'2) der Legewalze und parallel zur Drehachse angeordnet ist, wobei das Verlagern der Legewalze zwischen ihren zwei Stellungen durch Schwenken der Walze um die Schwenkachse herum ausgeführt wird, wobei die Walze in der Lage ist, von Betätigungsmitteln (45) zwischen ihren zwei Stellungen verlagert zu werden, wobei der Faserlegekopf weiter ein zusätzliches bewegliches Führungssystem (5, 105) umfasst, das mit der Legewalze verbunden ist und sich mit dieser letzteren zwischen ihrer ersten und ihrer zweiten Stellung verschiebt, umfassend erste zusätzliche Führungsmittel (50a, 60a; 150a), die in der Lage sind, jede aus dem Hauptführungssystem (3) austretende Faser zum ersten Abschnitt (210a) der zylinderförmigen Oberfläche der Walze in ihrer ersten Stellung zu führen, und zweite zusätzliche Führungsmittel (50b, 60b; 150b), die in der Lage sind, jede aus dem Hauptführungssystem (3, 103) austretende Faser zum zweiten Abschnitt (210b) der zylinderförmigen Oberfläche der Walze in ihrer zweiten Stellung zu führen,
**dadurch gekennzeichnet, dass** der Faserlegekopf weiter Arretiermittel (46a, 46b) umfasst, um das Arretieren der Walze (2, 102) in jeder ihrer zwei Stellungen zu gewährleisten.

2. Faserlegekopf nach Anspruch 1, **dadurch gekennzeichnet, dass** die Legewalze (2, 102) an den unteren Enden (41, 141) von zwei Armen (4a, 4b; 104a, 104b), die sich beidseits des Hauptführungssystems erstrecken, um ihre Drehachse (A2, A'2) herum drehbar montiert ist, wobei jeder Arm um die Schwenkachse (A3, A'3) herum schwenkbar montiert ist.

3. Faserlegekopf nach Anspruch 1 oder 2, **dadurch gekennzeichnet, dass** das zusätzliche Führungssystem (5) um die Drehachse (A2) der Walze herum schwenkbar montiert ist, wobei Arretiermittel (56a, 56b, 57a, 57b) in der Lage sind, das zusätzliche Führungssystem drehfest zu arretieren, sodass wenn sich die Walze (2) in ihrer ersten Stellung befindet, die ersten zusätzlichen Führungsmittel (50a, 50b) in der Verlängerung des Führungssystems (3) positioniert sind, und dass wenn sich die Walze in ihrer zweiten Stellung befindet, die zweiten Führungsmittel (50b, 60b) in der Verlängerung des Führungssystems (3) positioniert sind.

4. Faserlegekopf nach Anspruch 2, **dadurch gekennzeichnet, dass** das zusätzliche Führungssystem (105) auf den Armen (104a, 104b) montiert ist.

5. Faserlegekopf nach einem der Ansprüche 1 bis 4, **dadurch gekennzeichnet, dass** die ersten und/oder zweiten zusätzlichen Führungsmittel einen Kamm (60a, 60b) umfassen, der eine Vielzahl von flexiblen Zinken (61) umfasst, die in der Lage sind, mit der oder den aus den Führungsmitteln austretenden Fasern einzugreifen, um die Faser(n) an der Legewalze in Anlage zu bringen.

6. Faserlegekopf nach einem der Ansprüche 1 bis 5, **dadurch gekennzeichnet, dass** die ersten und/oder zweiten zusätzlichen Führungsmittel einen zusätzlichen Führungskanal (54, 55; 154, 155) für jede Faser des Bandes umfassen.

7. Faserlegekopf nach einem der Ansprüche 1 bis 6, **dadurch gekennzeichnet, dass** das zusätzliche Führungssystem (5, 105) Wärmereguliermittel umfasst, die in der Lage sind, einen Strom von Wärmeregulierfluid in Richtung der Walze zuzuführen, um die Walze von außen her temperaturzuregeln.

8. Faserlegekopf nach einem der Ansprüche 1 bis 7, **dadurch gekennzeichnet, dass** das Hauptführungssystem (3, 103) in der Lage ist, eine Vielzahl von Fasern (F1, F2) in der Form eines Bandes zur Legewalze hin zu führen, das Hauptführungssystem erste und zweite Führungsmittel umfasst, die versetzt entlang zwei Führungsebenen (P1, P2; P'1, P'2) angeordnet sind, welche sich von stromaufwärts nach stromabwärts einander annähern, um die Fasern (F1, F2) in der Form von zwei Faserlagen zur Walze (2, 102) hin zu führen, wobei die ersten und zweiten Führungsmittel erste Kanäle (34) und zweite Kanäle (35) umfassen, die in einer oder mehreren Platten gebildet sind, wobei die Kanäle am unteren Rand der Platte(n) ausmünden.

9. Faserlegekopf nach den Ansprüchen 6 und 8, **dadurch gekennzeichnet, dass** die ersten und zweiten zusätzlichen Führungsmittel jeweils eine erste Leiste (50a, 150a) und eine zweite Leiste (50b, 150b) umfassen, jede mit ersten zusätzlichen Kanälen (54, 154) und mit zweiten zusätzlichen Kanälen (55, 155) ausgestattet, die versetzt angeordnet sind.

10. Faserlegekopf nach einem der Ansprüche 1 bis 9 in Kombination mit Anspruch 2, **dadurch gekennzeichnet, dass** die Legewalze (102) drehbar zwischen zwei Einbauteilen (123) montiert ist, mit denen die Legewalze über Einbaumittel an den Enden (141) der Arme (104a, 104b) herausnehmbar montiert ist.

11. Faserlegekopf nach den Ansprüchen 4 und 10, **dadurch gekennzeichnet, dass** das zusätzliche Führungssystem (103) auf den Einbauteilen (123) montiert ist.

12. Faserlegekopf nach einem der Ansprüche 1 bis 11, **dadurch gekennzeichnet, dass** das Führungssystem (3, 103) eine Mittelebene (P3, P'3) aufweist, wobei die Drehachse (A2, A'2) der Legewalze (2, 102) in ihrer ersten Stellung und in ihrer zweiten Stellung beidseits der Mittelebene angeordnet ist, wobei die Mittelebene in Bezug auf die Drehachse (A2, A'2) in der ersten und zweiten Stellung der Legewalze im Wesentlichen tangential zur zylinderförmigen Oberfläche der Legewalze oder neben der zylinderförmigen Oberfläche angeordnet ist.

13. Faserlegekopf nach einem der Ansprüche 1 bis 12, **dadurch gekennzeichnet, dass** er ein Heizsystem umfasst, welches erste Heizmittel, die in der Lage sind, eine Wärmestrahlung in Richtung des Faserbandes vor dessen Verdichten und/oder in Richtung der Form oder der bereits gelegten Faserbänder zu emittieren, wenn sich die Walze in ihrer ersten Stellung befindet, und zweite Heizmittel umfasst, die in der Lage sind, eine Wärmestrahlung in Richtung des Faserbandes vor dessen Verdichten und/oder in Richtung der Form oder der bereits gelegten Faserbänder zuzuführen, wenn sich die Walze in ihrer zweiten Stellung befindet, wobei das Heizsystem vom Laser-Typ weiter eine Laserquelle und Übertragungs- und Verteilmittel umfasst, die mit der Laserquelle verbunden und in der Lage sind, den von der Quelle emittierten Laserstrahl abhängig von der Stellung der Walze zum ersten oder zweiten Heizmittel zuzuführen.

14. Faserlegemaschine, die einen Kopf nach einem der Ansprüche 1 bis 13 und ein System zum Verschieben des Kopfes umfasst, **dadurch gekennzeichnet, dass** sie eine Steuereinheit umfasst, die in der Lage ist, das Verlagern der Walze zwischen ihren zwei Stellungen zu steuern, und das Verschieben des Kopfes entlang einer parametrierten Bahn unter Verwendung von zwei abhängig von der Stellung der Walze unterschiedlichen Ausgangspunkten zu steuern.

## Claims

1. Fiber application head (1, 101) for making composite material parts, comprising an application roller (2, 102) for applying a strip formed of one or more fibers (F1, F2) to the application surface (91) of a mold (9), and a main guide system (3, 103) for guiding at least one fiber to said application roller, said application roller is mounted movable relative to said main guide system (3, 103) between a first position, in which said strip is guided by the main guide system on a first portion (210a) of the cylindrical surface of the roller, and a second position in which said strip is guided on a second portion (210b) of the cylindrical surface of the roller, said application roller (2, 102) is mounted pivotable about a pivoting axis (A3, A'3) located above the rotation axis (A2, A'2) of the application roller and parallel to said rotation axis, the operation of the application roller between its two positions being carried out by pivoting said roller about said pivoting axis, said roller being capable of being operated between its two positions by actuating means (45), the fiber application head further comprising a movable additional guide system (5, 105), linked to said application roller and moving with it between its first and second positions, comprising first additional guide means (50a, 60a ; 150a) capable of guiding each fiber exiting the main guide system (3) towards the first portion (210a) of the cylindrical surface of the roller in its first position, and second additional guide means (50b, 60b ; 150b) capable of guiding each fiber exiting the main guide system (3, 103) towards the second portion (210b) of the cylindrical surface of the roller in its second position,
**characterized in that** the fiber application head further comprises blocking means (46a, 46b) for blocking the roller (2, 102) in each of its two positions.

2. Fiber application head according to claim 1, **characterized in that** said application roller (2, 102) is rotatably mounted about its rotation axis (A2, A'2) at the lower ends (41, 141) of two arms (4a, 4b ; 104a, 104b), extending on either side of the main guide system, each arm being pivotally mounted about said pivot axis (A3, A'3).

3. Fiber application head according to claim 1 or 2, **characterized in that** the additional guide system (5) is mounted pivotably about the rotation axis (A2) of the roller, blocking means (56a, 56b, 57a, 57b) being able to rotationally block said additional guide system so that the first additional guide means (50a, 60a) are positioned in the extension of the guide system (3) when the roller (2) is in its first position, and that the second guide means (50b, 60b) are positioned in the extension of the guide system (3) when the roller is in its second position.

4. The fiber application head according to claim 2, **characterized in that** the additional guide system (105) is mounted on said arms (104a, 104b).

5. A fiber application head according to one of claims 1 to 4, **characterized in that** said first and/or second additional guide means comprises a comb (60a, 60b) comprising a plurality of flexible tabs (61) adapted to come against said fiber(s) exiting from the guide means to put said fiber(s) in contact with the application roller.

6. Fiber application head according to one of claims 1 to 5, **characterized in that** the first and/or second additional guide means comprise an additional guide channel (54, 55; 154, 155) for each fiber of the belt.

7. Fiber application head according to one of claims 1 to 6, **characterized in that** said additional guiding system (5, 105) comprises thermal control means capable of delivering a flow of thermal regulation fluid towards the roller, in order to regulate the temperature of said roller from the outside.

8. Fiber application head according to one of claims 1 to 7, **characterized in that** said main guide system (3, 103) is adapted to guide a plurality of fibers (F1, F2) towards the application roller in the form of a strip, the main guide system comprises first and second guide means staggered in two guide planes (P1, P2 ; P'1, P'2) approaching each other from upstream to downstream to guide the fibers (F1, F2) towards the roller (2, 102) in the form of two layers of fibers, the first and second guide means comprising first channels (34) and second channels (35), formed in one or more plates, said channels leading to the lower edge of the plate or plates.

9. Fiber application head according to claims 6 and 8, **characterized in that** the first and second additional guide means comprise respectively a first bar (50a, 150a) and a second bar (50b, 150b), each provided with staggered first additional channels (54, 154) and second additional channels (55, 155).

10. Fiber application head according to one of claims 1 to 9, in combination with claim 2, **characterized in that** said application roller (102) is rotatably mounted between two assembly parts (123) by which said application roller is removably mounted via assembly means to the ends (141) of said arms (104a, 104b).

11. Fiber application head according to claims 4 and 10, **characterized in that** the additional guide system (103) is mounted on said assembly parts (123).

12. Fiber application head according to one of claims 1 to 11, **characterized in that** said guiding system (3, 103) has an average plane (P3, P'3), the rotation axis (A2, A'2) of the application roller (2, 102) in its first position and in its second position being arranged on either side of said average plane, said average plane being disposed substantially tangentially to the cylindrical surface of the application roller, or beyond said cylindrical surface with respect to the rotation axis (A2, A'2) in the first and second positions of the application roller.

13. Fiber application head according to one of claims 1 to 12, **characterized in that** it comprises a heating system comprising first heating means capable of emitting thermal radiation towards the strip of fibers before its compaction and/or towards the mould or strip of fibers already applied when the roller is in its first position, and second heating means capable of delivering thermal radiation towards the strip of fibers before its compaction and/or towards the mould or strip of fibers already applied when the roller is in its second position, said heating system, of laser-type, further comprising a laser source and transmission and distribution means, connected to said laser source and capable of delivering the laser beam emitted from the source to the first or second heating means depending on the position of the roller.

14. Fiber application machine comprising a head according to one of claims 1 to 13, and a system for moving said head, **characterized in that** it comprises a control unit capable of controlling the operation of the roller between its two positions, and of controlling the movement of the head according to a trajectory configured by using two different origin points depending on the position of the roller.
